Europäisches Patentamt

European Patent Office

Office européen des brevets

(11) Numéro de publication: **0 321 348 B1**

(12) **FASCICULE DE BREVET EUROPEEN**

(45) Date de publication de fascicule du brevet: **14.10.92**

(51) Int. Cl.⁵: **C22B 60/04**, C01G 56/00, G21C 19/46

(21) Numéro de dépôt: **88403197.2**

(22) Date de dépôt: **15.12.88**

(54) **Procédé de réextraction en solution aqueuse du plutonium présent dans un solvant organique, utilisable notamment pour la partition uranium plutonium.**

(30) Priorité: **18.12.87 FR 8717726**

(43) Date de publication de la demande:
**21.06.89 Bulletin 89/25**

(45) Mention de la délivrance du brevet:
**14.10.92 Bulletin 92/42**

(84) Etats contractants désignés:
**DE FR GB**

(56) Documents cités:
**FR-A- 1 387 127**    **FR-A- 1 561 082**
**FR-A- 2 003 831**    **FR-A- 2 553 560**
**LU-A- 42 162**    **LU-A- 48 589**
**US-A- 2 865 705**    **US-A- 3 092 446**
**US-A- 3 987 145**    **US-A- 4 229 421**

**HYDROMETALLURGY, vol. 4, no. 1, 1979, pages 1-20, Elsevier Scientific Publishing Co., Amsterdam, NL; I.L. JENKINS: "Solvent extraction chemistry in the atomic energy industry - A review"**

(73) Titulaire: **COMMISSARIAT A L'ENERGIE ATO-MIOUE Etablissement de Caractère Scientifique Technique et Industriel**
**31/33, rue de la Fédération**
**F-75015 Paris(FR)**

(72) Inventeur: **Germain, Michel**
**94 Chemin du Moulin**
**F-91460 Marcoussis(FR)**
Inventeur: **Gillet, Bruno**
**8 Rue Pierre-Joseph Redouté**
**F-92360 Meudon la Forêt(FR)**
Inventeur: **Pasquiou, Jean-Yves**
**48 Allée des Graviers de la Salmouille**
**F-91190 Gif sur Yvette(FR)**

(74) Mandataire: **Mongrédien, André et al**
**c/o BREVATOME 25, rue de Ponthieu**
**F-75008 Paris(FR)**

## Description

La présente invention a pour objet un procédé de réextraction dans une solution aqueuse du plutonium présent dans un solvant organique.

Ce procédé peut être utilisé en particulier pour séparer le plutonium de l'uranium dans les premiers stades du retraitement des combustibles nucléaires irradiés, ou pour réextraire les dernières traces de plutonium à la fin des cycles de partition uranium-plutonium ou d'extraction du plutonium.

Dans la plupart des installations de retraitement de combustibles nucléaires irradiés, on dissout tout d'abord le combustible dans une solution nitrique qui est soumise ensuite à un premier cycle d'extraction consistant à séparer simultanément le plutonium et l'uranium de la majeure partie des produits de fission par extraction dans un solvant organique, par exemple le phosphate de tributyle. On procède ensuite à l'opération de partition uranium/plutonium qui consiste à mettre en contact le solvant organique contenant l'uranium, le plutonium et certains produits de fission avec une solution aqueuse renfermant un agent chimique susceptible de réduire le plutonium de l'état (IV) à l'état (III) pour réextraire celui-ci en phase aqueuse alors que l'uranium reste dans le solvant organique. Pour cette opération, l'agent réducteur généralement utilisé est le nitrate uraneux auquel on ajoute toutefois un agent stabilisant constitué par du nitrate d'hydrazine qui a pour fonction de protéger les espèces réduites uranium (IV) et plutonium (III) des agents oxydants présents dans la solution, car ces espèces réduites ne sont pas stables en l'absence d'agent stabilisant.

Un procédé utilisant une solution aqueuse d'uranium IV et de nitrate d'hydrazine pour réextraire le plutonium dans cette solution aqueuse est décrit par exemple dans FR-A- 2 003 831.

L'utilisation de nitrate d'hydrazine pour stabiliser le plutonium (III) et l'uranium (IV) présente certains inconvénients.

En effet, le nitrate d'hydrazine est susceptible de se décomposer dans diverses conditions en donnant naissance à deux produits gênants qui sont l'acide azothydrique et les ions ammonium.

La formation de l'acide azothydrique résulte de la principale propriété du nitrate d'hydrazine, qui est de réagir rapidement avec l'acide nitreux selon le schéma réactionnel suivant :

$$N_2H_5NO_3 \ + \ HNO_2 \rightarrow N_3H \ + \ HNO_3 \ + \ 2H_2O$$

En présence d'un excès de nitrate d'hydrazine, $N_3H$ est le principal produit formé, alors qu'en présence d'un excès de $HNO_2$, $N_3H$ est détruit en $N_2$ et $N_2O$ selon le schéma réactionnel suivant :

$$N_3H \ + \ HNO_2 \rightarrow N_2 \ + \ N_2O \ + \ H_2O$$

La formation des ions ammonium résulte :
1°) - de la réduction du Pu (IV) par le nitrate d'hydrazine selon le schéma réactionnel:

$$Pu^{4+} \ + \ N_2H_5^+ \rightarrow Pu^{3+} \ + \ NH_4 \ + \ 1/2N_2 \ + \ H^+ \text{, et}$$

2°) - de la destruction de l'hydrazine par les ions nitrate, qui est catalysée par le technétium souvent présent dans le solvant organique du premier stade de retraitement des combustibles nucléaires irradiés.

La présence d'acide azothydrique est particulièrement gênante car ce dernier est susceptible de donner des sels instables ou explosifs.

Un autre procédé de réextraction du plutonium dans une solution aqueuse consiste à réaliser la réduction du Pu(IV) en Pu(III) en utilisant le nitrate d'hydroxylamine qui joue à la fois le rôle d'agent réducteur du Pu(IV) et d'agent stabilisant de l'espèce réduite Pu(III) en phase aqueuse.

Un procédé de ce type est décrit par exemple dans US-A- 3 987 145.

Lorsqu'on utilise le nitrate d'hydroxylamine, il est toutefois nécessaire d'opérer à une température de 50 à 80°C pour avoir une vitesse de réduction suffisante. En revanche, il n'est pas nécessaire d'utiliser de nitrate d'hydrazine bien que dans certains cas cette addition soit envisagée également, ce qui conduit aux inconvénients mentionnés ci-dessus. De plus, l'inconvénient majeur de ce procédé est dû à l'emploi de nitrate d'hydroxylamine comme agent réducteur car celui-ci réagit beaucoup plus lentement que le nitrate uraneux ; de ce fait, les performances de ce procédé sont plus limitées car le nitrate d'hydroxylamine n'est vraiment efficace que dans un domaine restreint de fonctionnement (faible acidité, température élevée, temps de contact élevé, ...).

La présente invention a précisément pour objet un procédé de réextraction dans une phase aqueuse du plutonium présent dans un solvant organique par réduction du plutonium (IV) en plutonium (III), qui permet d'obtenir des résultats équivalents à ceux que l'on obtient avec le système nitrate uraneux-nitrate d'hydrazine, sans donner lieu à la formation de produits gênants comme l'acide azothydrique.

Le procédé selon l'invention, pour réextraire dans une solution aqueuse sous forme deplutonium (III) le plutonium (IV) présent dans un solvant organique, consiste à mettre en contact ce solvant organique avec une solution aqueuse constituée par une solution acide contenant un sel uraneux et un sel d'hydroxylamine, la teneur en hydroxylamine de la solution aqueuse étant d'au moins 10-2 mol/l.

Dans ce procédé, le sel uraneux est l'agent réducteur du Pu(IV) et il effectue cette réduction rapidement et quantitativement.

Le sel d'hydroxylamine est utilisé ici comme agent stabilisant la valence (IV) de l'uranium et la valence (III) du plutonium en milieu acide. Dans le procédé de l'art antérieur, on utilisait déjà le sel d'hydroxylamine comme agent stabilisant la valence (III) du plutonium, mais en aucun cas comme agent stabilisant la valence (IV) de l'uranium. Ainsi, le sel d'hydroxylamine remplace avantageusement le nitrate d'hydrazine utilisé auparavant comme stabilisant, d'autant plus qu'il présente par ailleurs la propriété de réduire le Pu-(IV) en Pu(III) lentement.

Dans l'invention, l'utilisation d'un sel d'hydroxylamine associé à un sel uraneux permet d'obtenir les performances du système de l'art antérieur nitrate uraneux-nitrate d'hydrazine sans en avoir les inconvénients, c'est-à-dire la formation de produits gênants.

Dans l'invention, on utilise généralement une solution aqueuse constituée par une solution d'acide nitrique qui présente de préférence une concentration en acide nitrique allant de 0,1 à 2,5 mol/l.

Les sels uraneux susceptibles d'être utilisés peuvent être très variés. Toutefois, on préfère généralement utiliser du nitrate uraneux, notamment lorsque la solution aqueuse de réextraction est une solution nitrique.

La quantité de sel uraneux présente dans la solution de réextraction dépend en particulier de la quantité de plutonium à réextraire qui peut atteindre 60 g.l$^{-1}$ et plus. Généralement, on utilise une solution aqueuse contenant de 2 à 150 g/l de nitrate uraneux.

Les sels d'hydroxylamine utilisés dans le procédé de l'invention peuvent être formés à partir d'acides minéraux ou d'acides organiques. A titre d'exemple de sels susceptibles d'être utilisés, on peut citer les nitrate, sulfate, chlorure, phosphate, formiate et acétate d'hydroxylamine. De préférence, on utilise le nitrate d'hydroxylamine, notamment lorsque la solution aqueuse de réextraction est une solution nitrique.

La quantité de sel d'hydroxylamine présente dans la solution aqueuse de réextraction dépend également de la quantité de plutonium à réextraire, mais aussi de la quantité de nitrate uraneux présente dans la solution de réextraction. Lorsque le sel d'hydroxylamine est le nitrate d'hydroxylamine, la solution aqueuse contient généralement de $10^{-2}$ à 0,5 mol/l de nitrate d'hydroxylamine.

La mise en contact du solvant organique contenant le plutonium avec la solution aqueuse de réextraction peut être effectuée dans tout appareillage classique d'extraction, par exemple dans des mélangeurs-décanteurs, des colonnes pulsées, des extracteurs centrifuges, etc.

On peut opérer à la température ambiante et à la pression atmosphérique. On peut toutefois utiliser des températures supérieures ou inférieures à la température ambiante. Généralement, on réalise cette mise en contact dans la gamme de températures allant de la température ambiante à 40°C, par exemple de 20 à 40°C. Ces conditions de températures ne sont pas suffisamment élevées pour que l'hydroxylamine joue le rôle d'agent réducteur à une vitesse appréciable.

Pour cette opération de mise en contact, les rapports en volume solvant organique/solution aqueuse sont choisis en fonction des concentrations en plutonium du solvant organique de façon à obtenir une réextraction quasi complète du plutonium dans la solution aqueuse. On utilise généralement un rapport en volume solution aqueuse de réextraction/solvant organique allant de 1 à 0,1. Les temps de contact utilisés peuvent être relativement faibles, par exemple de l'ordre de 1 minute au moins.

Le procédé décrit ci-dessus peut être utilisé comme on l'a indiqué précédemment pour l'opération de partition uranium-plutonium. Il peut aussi être utilisé pour réextraire les dernières traces de plutonium présentes dans un solvant organique au dernier stade de certains cycles du retraitement des combustibles nucléaires irradiés, par exemple après la partition uranium-plutonium ou après un cycle complet de séparation du plutonium.

Les solvants organiques contenant le plutonium qui peuvent être utilisés dans le procédé de l'invention, peuvent être de différents types. Ces solvants comprennent généralement un diluant inerte et un extractant organique. A titre d'exemple, cet extractant organique peut être choisi parmi le phosphate de tributyle, les amines, les amides, les diamides, les composés organophosphorés acides, les oxydes neutres de phosphine, les acides alkylthiophosphoriques, etc.

D'autres caractéristiques et avantages de l'invention apparaîtront mieux à la lecture des exemples suivants donnés bien entendu à titre illustratif et non limitatif, en référence au dessin annexé sur lequel :

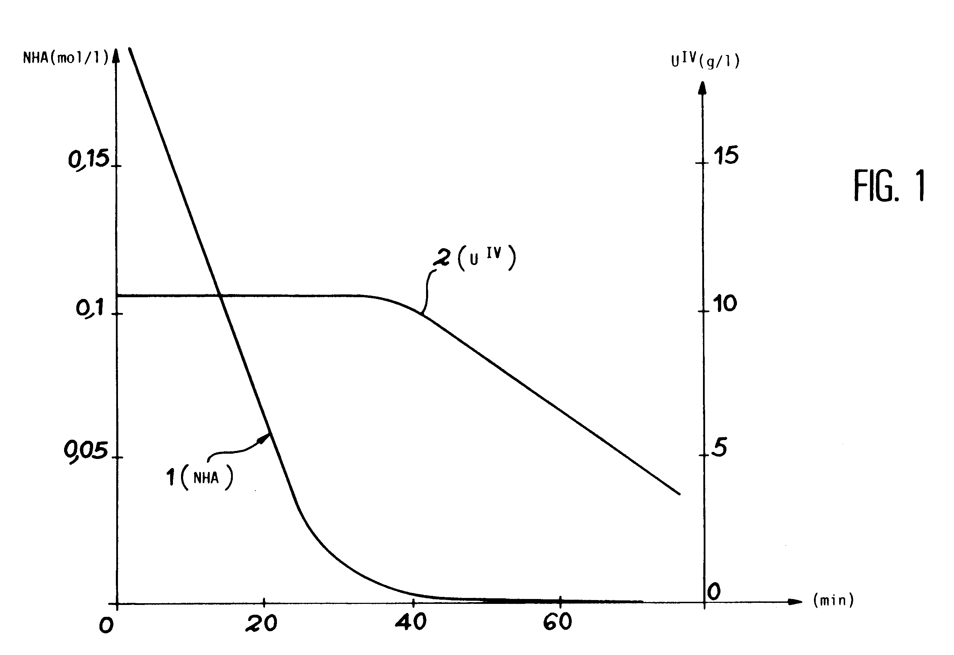

- la figure 1 est un diagramme représentant l'évolution d'une solution aqueuse de réextraction conforme à l'invention en fonction du temps, lorsqu'on fait barboter dans celle-ci du monoxyde d'azote NO ;
- la figure 2 est une représentation schématique d'une installation comprenant une colonne pulsée et un mélangeur décanteur dans laquelle est mis en oeuvre le procédé de l'invention ;
- la figure 3 est un diagramme représentant l'évolution de la concentration en plutonium du solvant organique à différents endroits d'une installation ; et
- la figure 4 est un diagramme représentant l'évolution de la concentration en $H^+$ de phase aqueuse à différents endroits d'une installation.

EXEMPLE 1
‒ ‒ ‒ ‒ ‒ ‒ ‒

On prépare une solution aqueuse de réextraction par mélange d'une solution aqueuse d'acide nitrique, du nitrate uraneux et du nitrate d'hydroxylamine (NHA) de façon à obtenir la composition suivante :
- $HNO_3$ : 1 mol/l,
- U(IV) : 110 g/l,
- NHA : 0,2 mol/l.

On stocke cette solution pendant deux mois à la température ordinaire, à l'abri de la lumière, et on détermine alors ses teneurs en $HNO_3$, en U(IV) et en nitrate d'hydroxylamine. Les résultats sont les suivants :
- $HNO_3$ : 1,1 mol/l,
- U(IV) : 100 g/l,
- NHA : 0,19 mol/l.

On remarque ainsi que le nitrate d'hydroxylamine a un bon pouvoir stabilisant sur l'uranium (IV) puisque les teneurs en $HNO_3$, en U(IV) et en nitrate d'hydroxylamine ont peu évolué après deux mois de stockage.

EXEMPLE 2
‒ ‒ ‒ ‒ ‒ ‒ ‒

Dans cet exemple, on prépare comme dans l'exemple 1, une solution aqueuse de réextraction ayant la composition suivante :
- $HNO_3$ : 1 mol/l,
- U(IV) : 10,6 g/l,
- NHA : 0,2 mol/l.

On fait barboter du monoxyde d'azote dans cette solution et on détermine les concentrations en uranium (IV) et en nitrate d'hydroxylamine de la solution en fonction du temps. Les résultats obtenus sont donnés sur la figure annexée, sur laquelle :
- la courbe 1 représente l'évolution de la concentration en nitrate d'hydroxylamine (en mol/l) en fonction du temps (en min), et
- la courbe 2 représente l'évolution de la concentration en uranium (IV) (en g/l) en fonction du temps (min).

Sur cette figure, on voit que le nitrate d'hydroxylamine est détruit lentement par le $HNO_2$ formé dans la solution, mais que l'uranium (IV) n'est pas oxydé tant que la teneur en nitrate d'hydroxylamine de la solution est supérieure à 0,01 mol/l.

On constate ainsi que le nitrate d'hydroxylamine est très efficace comme stabilisant de l'uranium (IV).

EXEMPLE 3
‒ ‒ ‒ ‒ ‒ ‒ ‒

Dans cet exemple, on réextrait le plutonium présent dans un solvant organique constitué par un diluant aliphatique (TPH par exemple) contenant 30% de tributylphosphate ayant la composition suivante :
- $HNO_3$ : 0,144 mol/l,
- U(VI) : 78,5 g/l,
- Tc : 24 mg/l,
- Pu(IV) : 0,83 g/l,
- acide dibutylphosphorique (DBP) : 1 g/l.

On utilise pour la réextraction du plutonium une solution aqueuse d'acide nitrique contenant du nitrate uraneux et du nitrate d'hydroxylamine ayant la composition suivante :
- $HNO_3$ : 1 mol/l,
- U(IV) : 1,66 g/l,
- NHA : 0,2 mol/l.

Pour réaliser cette réextraction, on met en contact 3 cm$^3$ du solvant organique avec 3 cm$^3$ de la solution aqueuse de réextraction pendant 3 minutes à la température ambiante et sous agitation, puis on sépare le solvant organique de la solution aqueuse de réextraction et on détermine sa teneur en plutonium. On répète ensuite ces opérations trois fois de façon à réaliser quatre contacts successifs.

Les résultats obtenus sont donnés dans le tableau 1 annexé.

EXEMPLE COMPARATIF 1

Dans cet exemple, on suit le même mode opératoire que dans l'exemple 3 pour réextraire le plutonium présent dans un solvant organique ayant la même composition que celui de l'exemple 3, mais en utilisant comme solution aqueuse de réextraction, une solution nitrique de nitrate uraneux et de nitrate d'hydrazine ($NO_3 N_2 H_5$) ayant la composition suivante :
- $HNO_3$ : 1 mol/l,
- U(IV) : 1,66 g/l,
- $N_2 H_5^+$ : 0,2 mol/l.

Les résultats obtenus dans ces conditions sont donnés dans le tableau 1.

Au vu de ce tableau, on constate que les résultats obtenus avec le système nitrate uraneux-nitrate d'hydroxylamine sont tout à fait comparables à ceux que l'on obtient avec le système nitrate uraneux-nitrate d'hydrazine. Ainsi, l'utilisation du système de l'invention est avantageuse car elle donne le même résultat en éliminant les inconvénients dus à l'emploi du nitrate d'hydrazine.

EXEMPLE 4

Dans cet exemple, on suit le même mode opératoire que dans l'exemple 3 pour réextraire le plutonium d'un solvant organique chargé de plutonium et contenant peu d'uranium.

On utilise une solution aqueuse de réextraction constituée par une solution nitrique de nitrate uraneux et de nitrate d'hydroxylamine ayant la composition suivante :
- $HNO_3$ : 1 mol/l,
- U(IV) : 20 g/l,
- NHA : 0,2 mol/l

pour réextraire le plutonium présent dans le solvant organique constitué par du TPH contenant 30% de tributylphosphate ayant la composition suivante :
- $HNO_3$ : 0,3 mol/l,
- Pu(IV) : 10 g/l,
- acide dibutylphosphorique : 2 g/l,
- U(VI) : 0,3 g/l,
- Tc : 20 mg/l.

On réalise la réextraction du plutonium en suivant le même mode opératoire que dans l'exemple 3. Les résultats obtenus sont donnés dans le tableau 2.

EXEMPLE COMPARATIF 2

Dans cet exemple, on utilise le même mode opératoire que dans l'exemple 4, pour réextraire le plutonium présent dans un solvant organique ayant la même composition que celui de l'exemple 4 mais en utilisant comme solution aqueuse de réextraction, une solution nitrique de nitrate uraneux et de nitrate d'hydrazine ayant la composition suivante :
- $HNO_3$ : 1 mol/l,
- U(IV) : 20 g/l,
- $N_2 H_5^+$ : 0,2 mol/l.

Les résultats obtenus sont donnés dans le tableau 2.

Au vu de ces résultats, on constate que, dans ces conditions, la solution aqueuse de réextraction de l'invention est également aussi efficace que la solution de nitrate uraneux et de nitrate d'hydrazine de l'art antérieur.

EXEMPLE 5

Cet exemple illustre la réextraction du plutonium (IV) en présence d'uranium (VI) en colonne pulsée, à la température ambiante.

Dans une colonne pulsée de 25 mm de diamètre et de 4 m de hauteur, on introduit :
- en bas de la colonne, à un débit de 6,86 l/h, un solvant organique chargé ayant la composition suivante :

tributylphosphate 30% en volume dans du TPH

$HNO_3$ : 0,24 mol/l

U : 67 g/l

Pu : 1,17 g/l
- à la hauteur de 1 m, au débit de 0,15 l/h, une solution réductrice ayant la composition suivante :

$HNO_3$ : 1 mol/l

U (IV) : 100 g/l

NHA : 0,23 mol/l
- en haut de la colonne, à un débit de 0,585 1/h, une solution provenant du barrage plutonium ayant la composition suivante :

$HNO_3$ : 1,9 mol/l

NHA : 0,12 mol/l

Pu : 0,433 g/l

U : 12 g/l

On opère en phase aqueuse continue et on obtient à l'équilibre :
- en bas de colonne une solution aqueuse ayant la composition suivante :

$HNO_3$ : 2,13 mol/l

Pu : 11,2 g/l

U : 10 g/l
- en haut de colonne un solvant déchargé contenant :

$HNO_3$ : 0,183 mol/l

Pu : 0,049 g/l

U : 69,6 g/l.

On obtient ainsi un facteur de concentration en plutonium de 9,04 et un facteur de décontamination de l'uranium vis-à-vis du plutonium de 15,4.

EXEMPLE 6
‒ ‒ ‒ ‒ ‒ ‒ ‒

Cet exemple illustre la désextraction du plutonium (IV) en présence d'uranium (VI), à la température ambiante, dans un mélangeur-décanteur, ce qui correspond au barrage plutonium duquel provient la solution aqueuse introduite en haut de la colonne pulsée de l'exemple 5.

Dans un mélangeur-décanteur de 5 étages, on introduit :
- à l'étage 1, à un débit de 6,86 l/h, le solvant organique contenant 30% de TBP dans TPH et contenant :

$HNO_3$ : 0,183 mol/l

Pu : 0,049 g/l

U : 69,6 g/l

qui sort de la colonne pulsée de l'exemple 5,
- à l'étage 5, à un débit de 0,56l/h, une solution de réextraction ayant la composition suivante :

$HNO_3$ : 0,2 mol/l

NHA : 0,26 mol/l.

On introduit l'agent réducteur ayant la composition suivante :

$HNO_3$ : 1 mol/l

NHA : 0,24 mol/l

U (IV) : 100 g/l
- à l'étage 1, à un débit de 11 ml/h,
- à l'étage 3, à un débit de 5 ml/h, et
- à l'étage 5, à un débit de 5 ml/h.

On obtient à la sortie de l'étage 1, une solution aqueuse ayant la composition suivante :

$HNO_3$ : 1,9 mol/l

NHA : 0,12 mol/l

Pu : 0,433 g/l

U : 12 g/l, et
- à la sortie de l'étage 5, un solvant organique contenant :

$HNO_3$ : 0,048 mol/l

U : 68,5 g/l

Pu : 0,45 mg/l.

Ceci correspond à un facteur de concentration en plutonium de 11,8 et un facteur de décontamination de l'uranium en plutonium de 109.

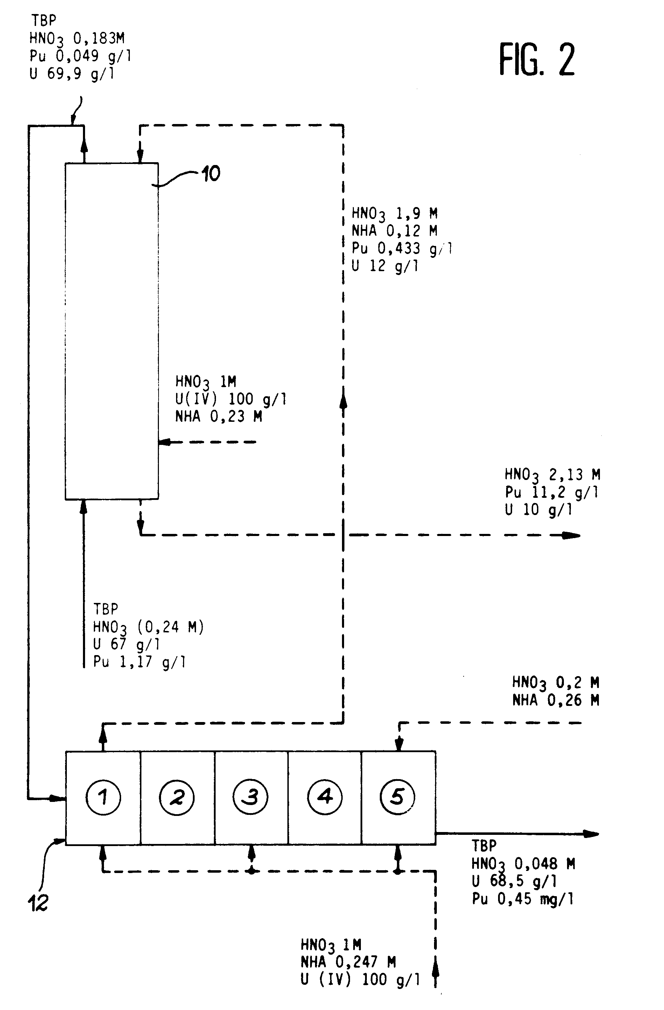

Sur la figure 2, on a représenté le schéma de circulation des phases aqueuses et organiques correspondant aux exemples 5 et 6. La référence 10 représente la colonne pulsée de l'exemple 5 et la référence 12, le mélangeur-décanteur à 5 étages de l'exemple 6.

Exemple comparatif 3

Dans cet exemple on réalise une désextraction du plutonium (IV) en présence d'uranium (VI) en colonne pulsée et une désextraction du plutonium (IV) en présence d'uranium (VI) en mélangeur-décanteur comme dans les exemples 5 et 6 mais en utilisant comme solution réductrice une solution nitrique 1M contenant 100 g/l d'uranium (IV) et 0,2 mol/l d'hydrate d'hydrazine.

Dans le tableau 3 qui suit on a regroupé les facteurs de décontamination en Pu obtenus dans ces conditions. Dans le tableau 3, on a également indiqué les résultats obtenus dans les exemples 5 et 6.

Au vu de ce tableau, on constate que les performances obtenues avec la solution réductrice de l'invention contenant de l'uranium (IV) et un sel d'hydroxylamine sont semblables à celles que l'on obtient lorsqu'on stabilise le réducteur uranium (IV) par de l'hydrazine.

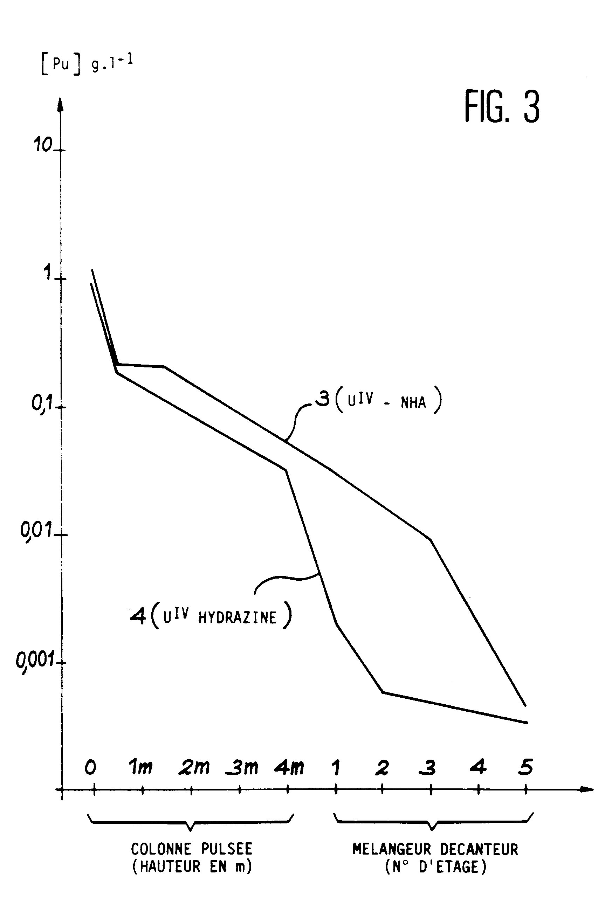

Sur la figure 3, on a représenté l'évolution de la concentration en plutonium du solvant organique dans la colonne pulsée et dans le mélangeur-décanteur en fonction de la hauteur dans la colonne pulsée et de l'étage du mélangeur-décanteur.

Sur cette figure, la courbe 3 se réfère aux exemples 5 et 6 conformes à l'invention alors que la courbe 4 se réfère à l'exemple comparatif 3.

En comparant ces deux courbes, on remarque qu'à la sortie du mélangeur-décanteur, la concentration en plutonium est sensiblement la même dans les deux cas.

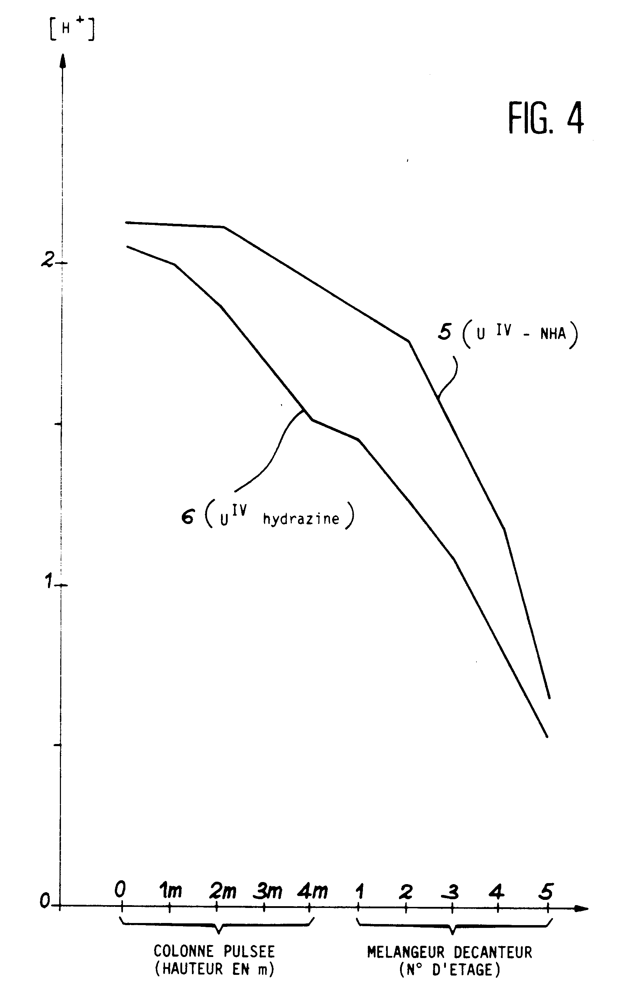

Sur la figure 4, on a représenté l'évolution de la concentration en ions $H^+$ de la phase aqueuse dans la colonne pulsée et dans le mélangeur-décanteur en fonction de la hauteur dans la colonne pulsée et de l'étage dans le mélangeur-décanteur.

Sur cette figure, la courbe 5 se réfère aux examples 5 et 6, la courbe 6 se réfère à l'exemple comparatif 3.

TABLEAU 1

| Nombre de contacts | EXEMPLE 3 U(IV) + NHA | | EXEMPLE COMPARATIF 1 U(IV) + $N_2H_5^+$ | |
|---|---|---|---|---|
| | (Pu)s mg.l$^{-1}$ | (Pu)s ‰ | (Pu)s mg.l$^{-1}$ | (Pu)s ‰ |
| 0 | 830 | 1000 | 830 | 1000 |
| 1 | 12,2 | 14,7 | 11,7 | 14,1 |
| 2 | 2,26 | 2,7 | 1,83 | 2,2 |
| 3 | 0,75 | 0,9 | 1,0 | 1,2 |
| 4 | 0,73 | 0,9 | 0,72 | 0,9 |

TABLEAU 2

| Nombre de contacts | EXEMPLE 4 U(IV) + NHA | | EXEMPLE COMPARATIF 2 U(IV) + $N_2H_5^+$ | |
|---|---|---|---|---|
| | (Pu)s mg.l$^{-1}$ | (Pu)s ‰ | (Pu)s mg.l$^{-1}$ | (Pu)s ‰ |
| 0 | 10.000 | 1000 | 10.000 | 1000 |
| 1 | 483 | 48,3 | 345 | 34,5 |
| 2 | 51,9 | 5,19 | 36,7 | 0,37 |
| 3 | 5,4 | 0,54 | 4,3 | 0,43 |
| 4 | 0,67 | 0,067 | 0,66 | 0,066 |

TABLEAU 3

| | Facteur de décontamination en Pu | |
|---|---|---|
| | Ex. comp. III | Ex. 5 et 6 |
| Désextraction en colonne pulsée (CP) | 19,4 | 15,4 |
| Désextraction en mélangeur-décanteur (MD) | 103 | 109 |
| CP + MD en série | 2000 | 1678 |

**Revendications**

**1.** Procédé pour réextraire dans une solution aqueuse sous forme de plutonium (III) du plutonium (IV) présent dans un solvant organique par mise en contact de ce solvant organique avec cette solution aqueuse, caractérisé en ce que la solution aqueuse est une solution acide contenant un sel uraneux U-(IV) et un sel d'hydroxylamine, la teneur en hydroxylamine de la solution aqueuse étant d'au moins $10^{-2}$ mol/l.

**2.** Procédé selon la revendication 1, caractérisé en ce que la solution aqueuse est une solution d'acide nitrique.

**3.** Procédé selon la revendication 2, caractérisé en ce que la solution aqueuse contient de 0,1 à 2,5 mol/l d'acide nitrique.

**4.** Procédé selon l'une quelconque des revendications 1 à 3, caractérisé en ce que le sel uraneux est le nitrate uraneux.

**5.** Procédé selon la revendication 4, caractérisé en ce que la solution aqueuse contient de 2 à 150 g/l de nitrate uraneux.

**6.** Procédé selon l'une quelconque des revendications 1 à 5, caractérisé en ce que le sel d'hydroxylamine est le nitrate d'hydroxylamine.

**7.** Procédé selon la revendication 6, caractérisé en ce que la solution aqueuse contient de $10^{-2}$ à 0,5 mol/l de nitrate d'hydroxylamine.

**8.** Procédé selon l'une quelconque des revendications 1 à 7, caractérisé en ce que le solvant organique contient de l'uranium et du plutonium.

**9.** Procédé selon l'une quelconque des revendications 1 à 8, caractérisé en ce que le solvant organique comprend un extractant organique choisi parmi le phosphate de tributyle, les amines, les amides, les diamides, les composés organo phosphorés acides, les oxydes neutres de phosphine et les acides

EP 0 321 348 B1

alkylthiophosphoriques.

10. Procédé selon l'une quelconque des revendications 1 à 9, caractérisé en ce que l'on réalise la mise en contact à une température allant de la température ambiante à 40°C.

**Claims**

1. Process for reextracting in an aqueous solution in the form of plutonium (III), the plutonium (IV) present in an organic solvent by contacting said organic solvent with said aqueous solution, characterized in that the aqueous solution is an acid solution containing a uranous salt U(IV) and a hyroxylamine salt, the hydroxylamine content of the aqueous solution being at least $10^{-2}$ mole/l.

2. Process according to claim 1, characterized in that the aqueous solution is a nitric acid solution.

3. Process according to claim 2, characterized in that the aqueous solution contains 0.1 to 2.5 mole/l of nitric acid.

4. Process according to any one of the claims 1 to 3, characterized in that the uranous salt is uranous nitrate.

5. Process according to claim 4, characterized in that the aqueous solution contains 2 to 150 g/l of uranous nitrate.

6. Process according to any one of the claims 1 to 5, characterized in that the hydroxylamine salt is hydroxylamine nitrate.

7. Process according to claim 6, characterized in that the aqueous solution contains $10^{-2}$ to 0.5 mole/l of hydroxylamine nitrate.

8. Process according to any one of the claims 1 to 7, characterized in that the organic solvent contains uranium and plutonium.

9. Process according to any one of the claims 1 to 8, characterized in that the organic solvent comprises an organic extractant chosen from among tributyl phosphate, amines, amides, diamides, acid organophosphorus compounds, neutral phosphine oxides and alkylthiophosphoric acids.

10. Process according to any one of the claims 1 to 9, characterized in that contacting takes place at a temperature between ambient temperature and 40°C.

**Patentansprüche**

1. Verfahren zur Rückextraktion in einer wässrigen Lösung in Form von Plutonium (III) von Plutonium (IV), das in einem organischen Lösungsmittel enthalten ist durch Inberührungbringen dieses organischen Lösungsmittels mit dieser wässrigen Lösung, dadurch gekennzeichnet, daß die wässrige Lösung eine saubere Lösung ist, die ein Uransalz U(IV) und ein Hydroxylaminsalz enthält, wobei der Gehalt an Hydroxylamin in der wässrigen Lösung wenigstens $10^{-2}$ mol/l beträgt.

2. Verfahren nach Anspruch 1, dadurch gekennzeichnet, daß die wässrige Lösung eine Salpetersäurelösung ist.

3. Verfahren nach Anspruch 2, dadurch gekennzeichnet, daß die wässrige Lösung zwischen 0,1 und 2,6 mol/l Salpetersäure enthält.

4. Verfahren nach einem der Ansprüche 1 bis 3, dadurch gekennzeichnet, daß das Uransalz Urannitrat ist.

5. Verfahren nach Anspruch 4, dadurch gekennzeichnet, daß die wässrige Lösung zwischen 2 und 150 g/l Urannitrat enthält.

9

**6.** Verfahren nach einem der Ansprüche 1 bis 5, dadurch gekennzeichnet, daß das Hydroxylaminsalz Hydroxylaminnitrat ist.

**7.** Verfahren nach Anspruch 6, dadurch gekennzeichnet, daß die wässrige Lösung zwischen $10^{-2}$ und 0,5 mol/l Hydroxylaminnitrat enthält.

**8.** Verfahren nach einem der Ansprüche 1 bis 7, dadurch gekennzeichnet, daß das organische Lösungsmittel Uran und Plutonium enthält.

**9.** Verfahren nach einem der Ansprüche 1 bis 8, dadurch gekennzeichnet, daß das organische Lösungsmittel ein organisches Extraktionsmittel enthält, das aus Tributylphosphat, Arminen, Amiden, Diamiden, sauren Organophosphorverbindungen, neutralen Phosphinoxyden und den Alkylthiophosphorsäuren ausgewählt ist.

**10.** Verfahren nach einem der Ansprüche 1 bis 9, dadurch gekennzeichnet, daß man das Inberührungbringen bei einer Temperatur ausführt, die von der Umgebungstemperatur bis 40°C reicht.

FIG. 1

TBP
HNO₃ 0,183M
Pu 0,049 g/l
U 69,9 g/l

FIG. 2

─10

HNO₃ 1,9 M
NHA 0,12 M
Pu 0,433 g/l
U 12 g/l

HNO₃ 1M
U(IV) 100 g/l
NHA 0,23 M

HNO₃ 2,13 M
Pu 11,2 g/l
U 10 g/l

TBP
HNO₃ (0,24 M)
U 67 g/l
Pu 1,17 g/l

HNO₃ 0,2 M
NHA 0,26 M

① ② ③ ④ ⑤

12

TBP
HNO₃ 0,048 M
U 68,5 g/l
Pu 0,45 mg/l

HNO₃ 1M
NHA 0,247 M
U (IV) 100 g/l

FIG. 3

COLONNE PULSEE
(HAUTEUR EN m)

MELANGEUR DECANTEUR
(N° D'ETAGE)

FIG. 4